# EUROPEAN PATENT SPECIFICATION

(11) **EP 3 522 056 B1**
(45) Date of publication and mention of the grant of the patent: **18.05.2022**
(21) Application number: 18155662.2
(22) Date of filing: 08.02.2018
(51) Int. Cl.: G06F 21/53, G06F 21/62, H04W 12/02, H04L 9/00, H04L 9/32

(54) **DISTRIBUTED COMPUTING SYSTEM FOR ANONYMIZED COMPUTATION**
VERTEILTES RECHENSYSTEM ZUR ANONYMISIERTEN BERECHNUNG
SYSTÈME DE CALCUL DISTRIBUÉ POUR CALCUL ANONYME

(30) Priority: 06.02.2018 EP 18155269
(43) Date of publication of application: 07.08.2019
(73) Proprietor: Nokia Technologies Oy, 02610 Espoo (FI)
(72) Inventor: BITAULD, David, Cambridge CB2 8DL (GB)
(74) Representative: Swindell & Pearson Limited

(56) References cited:
- WO-A1-2014/030302
- WO-A1-2017/190795
- US-A1- 2017 173 262

## Description

The present invention related to distributed computing systems, particularly distributed computing systems applying trusted execution environments.

### BACKGROUND

In many applications of distributed computing techniques it is desirable to collect data from a large number of devices while preserving anonymity of the devices. Different techniques such as differential privacy exist that ensures preservation of anonymity at the cost of data accuracy. In general, the larger the amount of data the more accurate results may be obtained. However, the large amount of data poses requirement on bandwidth and latency of data communications. Document WO 2017/190795 discloses a related system for evaluating telemetry data.

### SUMMARY OF THE INVENTION

The invention is defined by the features of the independent claims. Some specific embodiments are defined in the dependent claims.

According to a first aspect of the present invention, there is provided a node for a distributed computing system, the node comprising a trusted execution environment (TEE), wherein the node is configured to perform at least: receiving first encrypted data from at least one data source; obtaining first decrypted data by decrypting the first encrypted data using the TEE; producing at least one of an intermediate result or a final result; wherein the producing an intermediate result comprises at least: determining a trust to a subsequent node; generating a computation result based on the first decrypted data; obtaining an encrypted computation result by encrypting the computation result for the subsequent node; and transmitting the encrypted computation result to the subsequent node, if the subsequent node is deemed trusted; wherein the producing a final result comprises at least: determining a trust to a previous node; and controlling, on the basis of the previous node being deemed trusted, at least one of generating an anonymized computation result on the basis of the first decrypted data; and transmitting the anonymized computation result to a data receiver.

According to a second aspect of the present invention, there is provided a method comprising: receiving, by a node of a distributed computing system, the node comprising a trusted execution environment (TEE), first encrypted data from at least one data source; obtaining, by the node, first decrypted data by decrypting the first encrypted data using the TEE; producing, by the node, at least one of an intermediate result or a final result; wherein the producing an intermediate result comprises at least: determining, by the node, a trust to a subsequent node; generating, by the node, a computation result based on the first decrypted data; obtaining, by the node, an encrypted computation result by encrypting the computation result for the subsequent node; and transmitting, by the node, the encrypted computation result to the subsequent node, if the subsequent node is deemed trusted; wherein the producing a final result comprises at least: determining, by the node, a trust to a previous node; and controlling, on the basis of the previous node being deemed trusted, at least one of generating, by the node, an anonymized computation result on the basis of the first decrypted data; and transmitting, by the node, the anonymized computation result to a data receiver.

According to a third aspect of the invention there is provided a computer program comprising a set of computer readable instructions that, when executed by at least one processor, cause an apparatus to perform a method according to an aspect.

According to a fourth aspect of the present invention there is provided a non-transitory computer readable medium having stored thereon a set of computer readable instructions that, when executed by at least one processor, cause an apparatus to at least: receiving, by a node of a distributed computing system, the node comprising a trusted execution environment (TEE), first encrypted data from at least one data source; obtaining, by the node, first decrypted data by decrypting the first encrypted data using the TEE; producing, by the node, at least one of an intermediate result or a final result; wherein the producing an intermediate result comprises at least: determining, by the node, a trust to a subsequent node; generating, by the node, a computation result based on the first decrypted data; obtaining, by the node, an encrypted computation result by encrypting the computation result for the subsequent node; and transmitting, by the node, the encrypted computation result to the subsequent node, if the subsequent node is deemed trusted; wherein the producing a final result comprises at least: determining, by the node, a trust to a previous node; and controlling, on the basis of the previous node being deemed trusted, at least one of generating, by the node, an anonymized computation result on the basis of the first decrypted data; and transmitting, by the node, the anonymized computation result to a data receiver.

### BRIEF DESCRIPTION OF THE DRAWINGS

FIGURE 1 illustrates a network architecture in accordance with at least some embodiments of the present invention;
FIGURE 2 illustrates a network architecture for remote attestation of trusted execution environments (TEEs) in accordance with at least some embodiments of the present invention;
FIGURE 3 illustrates a cloud network infrastructure in accordance with at least some embodiments of the present invention;
FIGURE 4 illustrates a network architecture comprising intermediate nodes in accordance with at least some embodiments of the present invention;
FIGURE 5 illustrates a network architecture comprising a series of nodes for performing anonymized computations;
FIGURE 6 illustrates a network architecture comprising nodes for performing anonymized computations connected in a circle;
FIGURE 7 illustrates a method in accordance with at least some embodiments of the present invention;
FIGURE 8 illustrates a sequence in accordance with at least some embodiments of the present invention;
FIGURE 9 illustrates a method in accordance with at least some embodiments of the present invention;
FIGURE 10 illustrates a method in accordance with at least some embodiments of the present invention;
FIGURE 11 illustrates an example apparatus capable of supporting at least some embodiments of the present invention; and
FIGURE 12 illustrates a sequence for proving trust between nodes in accordance with at least some embodiments of the present invention example.

### EMBODIMENTS

In the present context, a data source may refer to a data generating device or a node of a distributed computing system. Nodes of a distributed computing system may comprise edge nodes, subsequent nodes, intermediate nodes and output nodes. A node may be configured to perform computations based on data received from data generating devices and/or based on data from one or more other nodes of a distributed computing system. Data received by a node from one or more other nodes of a distributed computing system may be referred to computation results. Computation results of output node of a distributed computing system may be referred to as final results. An anonymized computation result may serve as a final result. A final result may be transmitted to a data receiver. Computation results of nodes that are not output nodes may be referred to as intermediate results. Attestation of a trusted execution environment (TEE) of a node may serve for attestation of the node for distributed computing. A distributed computing system may refer to nodes connected by data connections and capable of communicating and coordinating their actions in order to provide a final result.

A TEE is a secure area of a processor. The TEE may be characterized by an identity and functionalities of data isolation and data integrity. The data isolation and data integrity provide that sensitive data is stored, processed and protected in an isolated, trusted environment. The identity of the TEE may comprise an identifier, e.g. a certification of the manufacturer, related to the processor it is running on, and an identifier related to the TEE provider who has signed the code of the TEE. The sensitive data may comprise data, computer program code and/or applications. The sensitive data stored in the TEE is not accessible to by other applications executed in the normal, non-trusted part, of the processor. The TEE may generate one or more secret keys for encrypting data. The secret keys generated within the TEE may be stored in the TEE and they never leave the TEE. In this way the keys may be used to encrypt data inside the TEE such that the data is protected when communicated outside of the TEE to a recipient node. At the recipient node, the data may be decrypted inside the TEE of the recipient node. The decryption key may be a private key of a public-private key pair for public key encryption or a pre-shared key for symmetric encryption. On the other hand data from a data source to the TEE may be protected by the public key of the TEE and securely decrypted within the TEE.

In connection with distributed computing by trusted execution environments (TEEs), encrypted data is received by a node from at least one data source and the data is decrypted using the TEE. The node produces at least one of an intermediate result or a final result. The producing an intermediate result comprises determining a trust to a subsequent node, generating a computation result based on the decrypted data and transmitting the encrypted computation result to the subsequent node if the subsequent node is deemed trusted. The producing a final result comprises determining a trust to a previous node. At least one of generating an anonymized computation result on the basis of the first decrypted data, and transmitting the anonymized computation result to a data receiver are and controlled, on the basis of the previous node being deemed trusted. In this way the data from the data generating device is anonymized before the data is provided to the data receiver, while computations are communicated between trusted nodes.

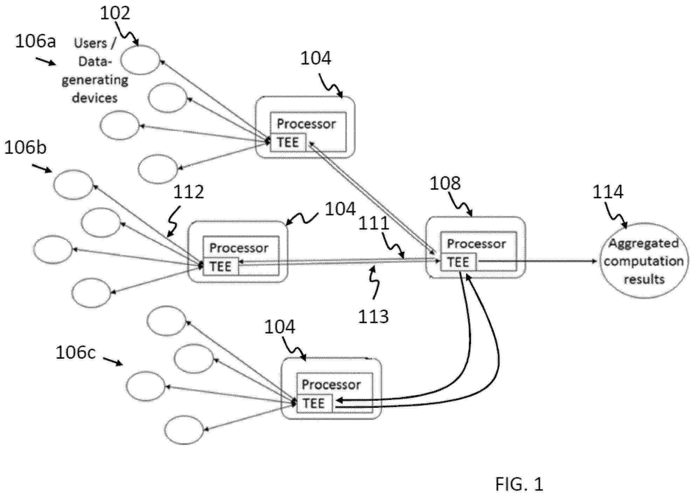

FIGURE 1 illustrates a network architecture in accordance with at least some embodiments of the present invention. The network architecture may implement a distributed computing system. The distributed computing system comprises nodes that are configured to perform computations that provide an anonymized computation result based on data obtained from data generating devices 102. The data from the data generating devices may be processed in at least two stages by trusted execution environments (TEEs) of the nodes. The stages may comprise a first stage of producing an intermediate result and a second stage of producing a final result. The nodes in the first stage may be referred to as previous nodes that transmit their computations results to one or more subsequent nodes in the second stage. The first stage of the computations may be performed by trusted execution environments of edge nodes 104 that are connected to the data generating devices such as sensors. Accordingly, the data generating devices serve as data sources to the edge nodes. The edge nodes may be connected to different subsets 106a, 106b, 106c of the data generating devices. Some of the data generating devices in the subsets may be the same but at least a part of the data generating devices of the subsets are different. It should be appreciated that all the data generating devices of the subsets may be different, whereby the edge nodes perform computations based on data from different data generating devices. Preferably the number of data generating devices is large such that results of the computations may be at least partly anonymized by the first stage of the computations.

The second stage of the computations may be performed by trusted execution environments of one or more subsequent nodes 108 that are connected to the edge nodes for receiving results of the computations performed by the edge nodes. Accordingly, the edge nodes serve as data sources to the subsequent nodes. The subsequent nodes 108 may serve as output nodes, and transmit results of anonymized computations, i.e. anonymized computation results, to a data receiver. The anonymized computation result may be calculated on the basis of the results received from the edges nodes and serve as a final result 114. Accordingly, the network architecture provides that the data from the data generating devices is anonymized at least by two stages of computations. Moreover, the anonymized computation result of the subsequent node is related to a larger number of data sources than the computation result of the edge nodes. It is therefore more accurate and more anonymous than results of the edge nodes after the first stage of anonymized computations.

The edges nodes 104 may be located geographically close to the data generating devices such that anonymized computations may be performed close to the data generating devices 102 originating the data. In this way the bandwidth and latency requirements of the stages of the anonymized computations may be controlled to an acceptable level even when the number of data generating devices is high.

The computations performed by the TEEs may provide at least aggregation of data. The aggregated data may be randomized and generalized for supporting anonymization of the data. Examples of the computations comprise computations based on techniques such as noise addition, permutation, differential privacy, aggregation, k-anonymity, l-diversity and t-closeness.

Preferably, the computations at the edge nodes 104 provide that the amount of data is reduced. The reduced amount of data supports controlling the bandwidth and latency requirements of the stages of the anonymized computations.

In an example, the computations at the edge nodes 104 may comprise aggregating data received from the data generating devices 102 such that results of the computations may be communicated with low bandwidth requirement and small latency to a subsequent node. The results of the computations may comprise statistics reflecting the characteristics of the data received from the data generating devices.

Connections between the nodes and data generating devices may be wired or wireless connections. Examples of the wired connections comprise Ethernet connections. Examples of the wireless connections comprise wireless local area network (WLANs) connections according to IEEE 802.11 and wireless mobile communications network connections. The mobile communications networks may comprise present communications networks such as 2G, 3G, 4G networks, as well as emerging technologies such as 5G, where wireless connections are established between user devices and the mobile communications networks.

Examples of the data generating devices comprise user devices, terminals, smart phones and Internet-of-Things devices such as sensors, smart meters, autonomous vehicles etc. which are capable of generating data and communicating the data to other devices over a connection.

The nodes of the distributed computing network may comprise devices that are configured to perform computations on data. Examples of suitable devices comprise computing devices comprising at least one TEE comprised in a processor of the device for generating computation results by the TEE. Also devices that are data generating devices may be configured to perform computations on data and operate as nodes of the distributed computing system.

The data receiver may be a device, application or other entity outside of the distributed computing system. Accordingly, the results communicated to the data receiver may be communicated outside of the TEEs, where the results may be in a non-isolated and non-encrypted environment, and be provided to third parties including humans.

It should be appreciated that the distributed computing system may be configured to support a distributed ledger service, for example a blockchain service, for attestation of integrity of one or more software or hardware components of the TEEs. The TEEs may be configured to transmit measurements for their integrity to a blockchain application. The blockchain application causes the measurements to be recorded to the blockchain, for example to a blockchain smartcontract. The data generating devices, edges nodes, subsequent nodes or other nodes of the distributed computing system may be participants of the blockchain as blockchain nodes for facilitating recording information indicating attestation of the TEEs. In this way the measurements become publicly available such that communications of data may be controlled on the basis of the ledger.

An example of communications between nodes and the data generating devices in the distributed computing system is described by three steps. The steps are illustrative and it should be appreciated that the steps may be performed also in different order than described and operations performed in any of the steps may be performed in the other steps. The first communication step 111 may take place between the subsequent node 108, e.g. a central node, and the edge node 104. This can happen before the distributed computing system is put into service with the data generating devices. The central node TEE and the edge node TEE may identify themselves by sending each other a digital signature and a corresponding public key to the data generating device. Each node can verify the other's identity with a certification authority, e.g. usually the manufacturer of the processor. Each TEE may provide the other with a remote attestation to prove that it will process data and/or results of anonymized computations appropriately.

The second communication step 112 may take place between the data generating device 106b and the edge node 104. The edge node TEE may identify itself by sending a digital signature and a corresponding public key to the data source. The data source can verify the identity with a certification authority, e.g. usually the manufacturer of the processor. The TEE may provide a remote attestation to the data source in order to prove that it will process the data appropriately. Together with its signature and the remote attestation the edge node TEE can also send a signature and attestation of the subsequent node 108 that will receive results of computations from the edge node TEE. The TEE may send a public key to the data generating device. The corresponding secret key is bound to the TEE such that its extraction is prevented.. Now the data generating device may encrypt its data with the public key and send it to the TEE, where the data may be decrypted and computations may be performed including data from the other data generating devices.

The third communication step 113 may takes place between the edge node 104 and the subsequent node. Both nodes may have already identified each other in step 111. The subsequent node TEE may send a public key to the edge node TEE 104. The edge node may encrypt the result of its computations with the public key and sends them to the subsequent node. The subsequent node may decrypt the results and perform computations including the results of the other edge nodes. The results of computations of the subsequent node are strongly anonymised and may be regarded as anonymized computation results. They can therefore be used outside of the TEEs, e.g. non-isolated and non-encrypted environments, and be provided to third parties including humans.

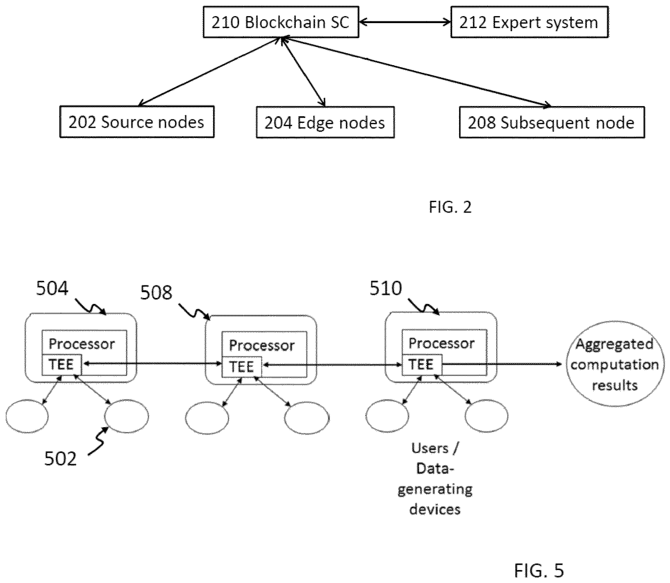

FIGURE 2 illustrates network architecture for remote attestation of TEEs in accordance with at least some embodiments of the present invention. The remote attestation is provided by a blockchain smart contract (BCSC) 210 based on measurements for integrity of one or more software or hardware components of trusted execution environments. The network architecture may comprise data generating devices 202, edge nodes 204 and one or more subsequent nodes 208 in accordance to the network architecture described with FIGURE 1. The BCSC may maintain attestation information of the TEEs of the edge nodes and the TEEs of subsequent nodes such that the attestation information may be obtained by the data generating devices and the nodes of the distributed computing system. The attestation information may comprise information indicating a positive or negative attestation of one or more TEEs. The information indicating a positive or negative attestation of a TEE may be associated with identity of the TEE and a result of the measurement for integrity of the TEE. In this way the attestation information may be made publicly available and the data generating devices may utilize the attestation information for controlling communications of data to edge nodes of the distributed computing system.

In an example, a measurement for integrity of a TEE may be performed by a BCSC 210 on request by a data generating device 202, edge node 204 or a subsequent node 208. A result of the measurement can be stored and communicated as a hash to the BCSC. The result of the measurement may be evaluated for attesting the TEE positively or negatively. A negative attestation may follow, if the software or hardware of the TEE and/or identity of the TEE have been modified or activities performed during initialization of the TEE are deficient or include malicious activities. Attestation of the TEE of the node may attest the node for distributed computing by the TEE.

In an embodiment, an expert system (ES) 212 is connected to a BCSC 210 and is configured to provide attestation of measurements for integrity of one or more software or hardware components of trusted execution environments. In this way a qualified evaluation of the measurements may be provided. Examples of the ESs 212 comprise a blockchain application and an artificial intelligence system.

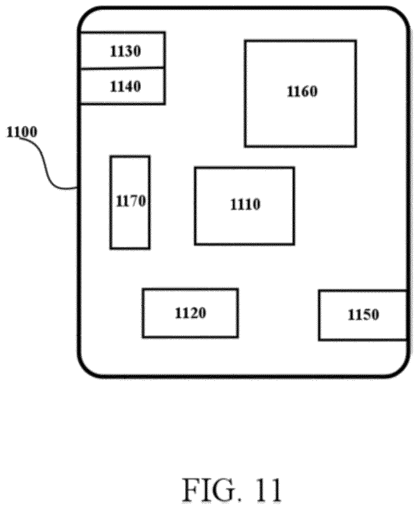

The blockchain application may be executed by an apparatus that causes a user interface via which an expert may view the results and give a positive or negative attestation of the results based on evaluation of the results. In this way experts, e.g. experts selected to a board of experts, may verify the TEEs. An example of the apparatus is described below with FIGURE 11.

The artificial intelligence system may operate autonomously without experts evaluating the results. The autonomous operation of the artificial intelligence system may be provided after a training-phase of the artificial intelligence system. The training-phase of the artificial intelligence system may comprise that one or more experts give positive or negative attestations of TEEs using the blockchain application. The attestations given by the experts may be compared with attestations of the same TEEs generated by the artificial intelligence system. Then, a correspondence between the attestations of the experts and the artificial intelligence system may be generated. When the generated correspondence is sufficiently high, for example 99%, the training-phase may be ended and the artificial system may start the autonomous operation.

In an example the ES may provide evaluating results of one or more measurements for integrity of the TEEs and generating information indicating a positive or negative attestation of the TEEs based on the results. The ES may store the information indicating attestation to the BCSC. In the BCSC the information indicating attestation may be associated with one or more TEEs or group of TEEs. The group of TEEs may comprise all the TEEs of the nodes of the distributed computing system. Storing the information indicating attestation to the BCSC provides that tampering of the TEEs may be detected and that the smart contract is followed to perform modifications to the ledger e.g. adding TEEs, adding experts to board of experts.

In an example, results of the measurements for integrity may be evaluated for a group of TEEs, whereby a positive or negative attestation may be generated for the whole group. All the TEEs of the distributed computing system may be a part of the group.

In an example, results of the measurements for integrity may be evaluated specific to each TEE, whereby a positive or negative attestation may be generated specific to each TEE.

Accordingly, it should be appreciated that a positive or negative attestation may be generated specific to TEEs and/or a group of TEEs. If no positive or negative attestation is available for a group in the BCSC, a data generating device may be configured to generate a positive or negative attestation for a group of TEEs.

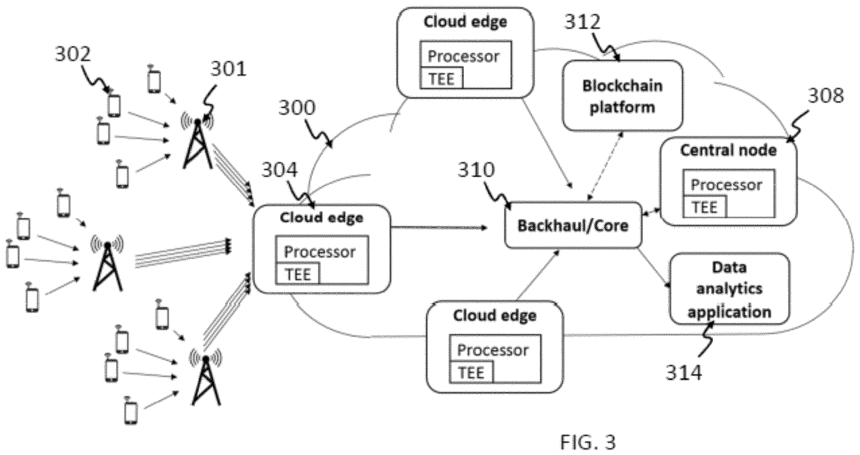

FIGURE 3 illustrates a cloud network infrastructure in accordance with at least some embodiments of the present invention. The cloud network infrastructure may implement the network architecture described with FIGURE 2. Data generating devices 302 may be connected to a cloud network infrastructure 300 via a wireless connection to an antenna 301. Accordingly, the antenna provides wireless access to the cloud infrastructure for the data generating devices. Examples of the antenna comprise devices provided with capabilities for communications with the data generating devices and the cloud infrastructure, such as base stations and access points. The antenna may be connected to a cloud edge node 304 of the cloud infrastructure and configured to multiplex communications between the data generating devices and the cloud edge node. The cloud edge node may serve as an edge node described with FIGURE 2. The cloud infrastructure may comprise a backhaul 310 over the internet for connecting the cloud edge node to one or more subsequent nodes 308 and providing communications of results of computations from the cloud edge node to the subsequent nodes. In this way computations may be performed in the cloud infrastructure in at least two stages. Results of the computations performed by the subsequent node may be communicated over the backhaul to a data receiver such as an application 314, for example a data analytics application, executed by the data receiver outside of the distributed computing system.

The cloud network infrastructure may comprise a blockchain platform 312. The blockchain platform may provide a BCSC for remote attestation of TEEs of the edge nodes and the subsequent nodes. The blockchain platform may be connected to an expert system described with FIGURE 2 such that the BCSC may obtain information indicating attestation of the TEEs.

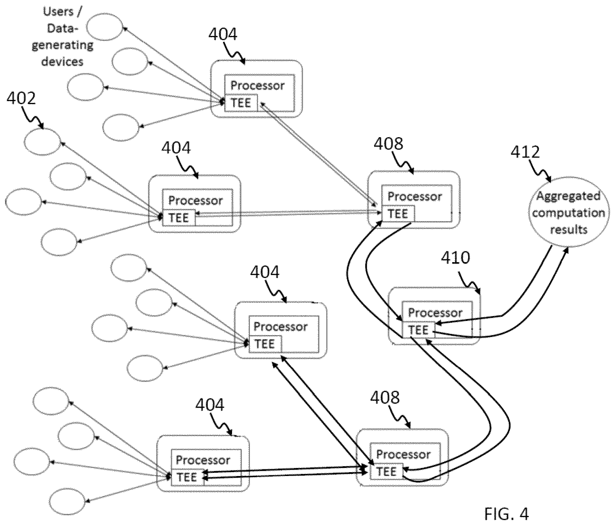

FIGURE 4 illustrates a network architecture comprising intermediate nodes in accordance with at least some embodiments of the present invention. The network architecture may comprise data generating devices 402 and edge nodes 404 in accordance with the data generating devices and edge nodes described with FIGURE 1. The edge nodes are connected to subsequent nodes that comprise intermediate nodes 408 and one or more output nodes 410. In this way trusted execution environments of the intermediate nodes 408 may generate computation results on the basis of results received from the edge nodes. The intermediate nodes may be connected to one or more subsequent nodes, such as the output node 410, and trusted execution environments of the subsequent nodes may generate anonymized computation results 412 on the basis of computation results received from the intermediate nodes. Accordingly, the subsequent nodes may serve as output nodes that provide the anonymized computation results as final results. The final result may be transmitted to a data receiver outside of the distributed computing system. In this way the computation results may be anonymized in more than two stages. It should be appreciated that the number of intermediate nodes between the edges nodes and the output node may vary. Accordingly, the nodes in the network architecture may form a tree of nodes, where each branch has the same length but it is possible that the branches have different lengths.

FIGURE 5 illustrates a network architecture comprising a series of nodes for performing anonymized computations. The nodes may comprise edge nodes 504 and subsequent nodes 508, 510 described with FIGURE 1. The nodes may be connected to data generating devices 502 similar to described for edge nodes with FIGURE 1. The nodes may be connected with each other into a series. In this way, a node, e.g. the subsequent node 508, may receive a computation result of the previous node, e.g. the edge node 502 or another subsequent node, in the series and use the computation result and data from data generating devices connected to the node to generate a computation result serving as an intermediate result. The node may transmit the intermediate result to a subsequent node that may be a last node 510 of the series. The last node 510 may generate an anonymized computation result serving as a final result based on all the data sources of the nodes in the series of nodes. The final result may be transmitted to a data receiver outside of the distributed computing system. The nodes in the series may perform computations having variable types of data sources and in more than two stages of anonymized computations whereby the anonymization of the computations performed by the node may be enhanced. It should be appreciated that the computation results and data may be processed within the TEEs of the nodes and communicated in an encrypted format between the data generating devices and the nodes.

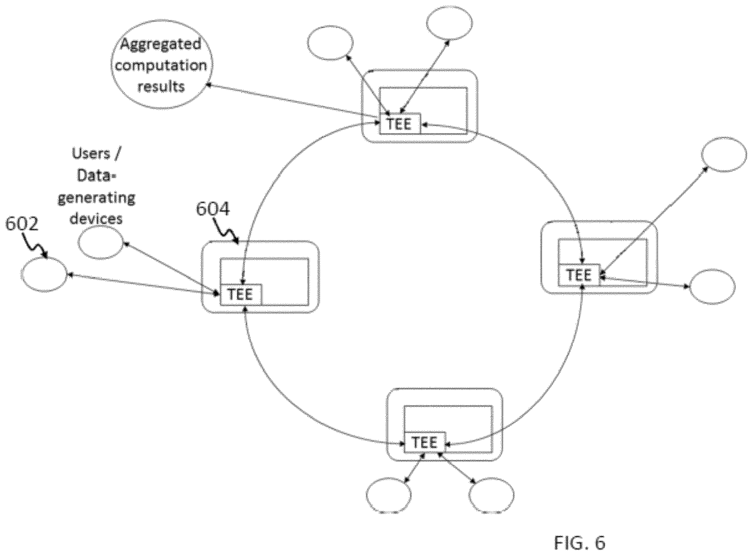

FIGURE 6 illustrates a network architecture comprising nodes for performing anonymized computations connected in a circle. The nodes 604 may serve for both edge nodes and subsequent nodes described with FIGURE 1. Accordingly, the nodes may be connected to data generating devices 602 similar to described for edge nodes with FIGURE 1 and the nodes may be also connected to another node of the network architecture. The nodes may be configured to generate computation results on the basis of the computation results received from the other node and data from data generating devices directly connected to the node. In this way the nodes in the circle may perform computations having variable types of data sources, whereby at least part of the data from the data sources has been already processed by at least one previous node, whereby the anonymization of the computations performed by the node may be enhanced. Moreover, the anonymized computation results serving as final results may be provided by any of the nodes in the network architecture.

It should be appreciated that network architectures in accordance with at least some embodiment comprise architectures, where nodes are connected in a series and circle as described above, and also architectures, where the nodes are connected in a circle and additionally by direct connections between the nodes. In this way even all the nodes may be connected together such that computations may be performed by the nodes in an arbitrary order.

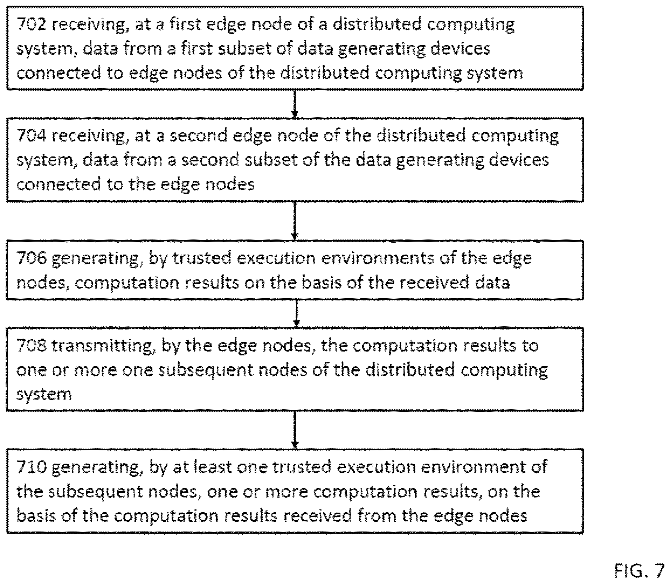

FIGURE 7 illustrates a method in accordance with at least some embodiments of the present invention. The method may be performed by a distributed computing system comprising nodes having TEEs that are connected into a distributed computing system in accordance with some of the FIGURES 1 to 6. Phase 702 comprises receiving, at a first edge node of a distributed computing system, data from a first subset of data generating devices connected to edge nodes of the distributed computing system. Phase 704 comprises receiving, at a second edge node of the distributed computing system, data from a second subset of the data generating devices connected to the edge nodes. Phase 706 comprises generating, by trusted execution environments of the edge nodes, computation results on the basis of the received data. Phase 708 comprises transmitting, by the edge nodes, the computation results to one or more one subsequent nodes of the distributed computing system. Phase 710 comprises generating, by at least one trusted execution environment of the subsequent nodes, one or more computation results, on the basis of the computation results received from the edge nodes. In this way the data from the data generating devices is anonymized at least by two stages of computations, first by the edge nodes and then by the subsequent nodes. Moreover, the computation results of the subsequent node are related to a larger number of data sources than the computation results of the edge nodes. It is therefore more accurate and more anonymous than results of the edge nodes after the first stage of anonymized computations, and the computation results of the subsequent nodes may be therefore, referred to anonymized computation results serving as final results

It should be appreciated that the communications of data, results of anonymized computations and computation results may be encrypted and decrypted by TEEs such that the data from the data generating devices may be processed securely within the TEEs of the nodes. The final results may be transmitted to a data receiver outside of the distributed computing system.

In an embodiment, communications of data and computation results are encrypted using an encryption key corresponding to a decryption key stored in the TEE of the node. In an example the encryption may be performed by using a public key bound to a corresponding secret key of the TEE of the recipient node. In this way both the communications and computations are secure.

In an embodiment, transmitting computation results from a node, e.g. edge node, to a subsequent node is performed provided the subsequent node is deemed trusted. In this way the transmission are performed only to trusted nodes.

In an embodiment, at least one of generating anonymized computation results and transmitting the anonymized computation result to a data receiver node is performed provided a previous node, the node serving as data source, is deemed trusted. In this way the transmission are performed only to trusted nodes

In an embodiment, a node is deemed trusted by remote attestation of the previous node and/or the subsequent node by a blockchain smart contract. In this way trust is provided in a tamper-proof manner, where the smart contract is followed in modifications to the ledger.

In an embodiment, remote attestation comprises at least, obtaining measurements for integrity of at least one software or hardware component of a trusted execution environment of the node; and attesting said measurements by an expert system.

In an embodiment, a distributed computing system may comprise subsequent nodes that comprise intermediate nodes and at least one output node, and phase 710 may comprise generating by the output node an anonymized computation result on the basis of results of computations received from the intermediate nodes. In this way the output node may provide the anonymized computation results as a final result. The final result may be transmitted to a data receiver outside of the distributed computing system.

An embodiment comprises a distributed computer program comprising a set of computer readable instructions that, when executed by at least one processor, cause an apparatus to perform a method comprising functionalities described with FIGURE 7. The distributed computer program may further comprise computer readable instructions that, when executed by the at least one processor, cause the apparatus to perform a method comprising functionalities in accordance with other embodiments described herein.

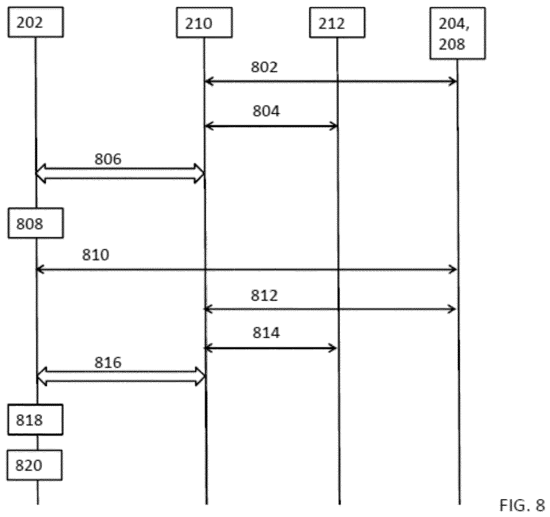

FIGURE 8 illustrates a sequence in accordance with at least some embodiments of the present invention. The sequence is described with reference to both FIGURE 2 and FIGURE 8. Phase 802 comprises obtaining, by the BCSC 210, measurements for integrity of at least one software or hardware component of one or more trusted execution environments of the nodes 204, 208 of the distributed computing system. Results of the measurements may be stored in the BCSC. Phase 804 comprises attesting the measurements by the expert system 212. The ES may provide evaluating of the measurement results and generating information indicating a positive or negative attestation for one or more of the nodes. The ES may store the information indicating the attestation to the BCSC. Phase 806 may comprise performing remote attestation of one or more of the nodes to a data generating device 202. The remote attestation may comprise that the data generating device requests attestation of the nodes from the BCSC and the BCSC transmits attestation information regarding the nodes to the data generating device in response to the request. Phase 808 may comprise controlling, by the data generating device, communications of data from the data generating device 202 to nodes of the distributed computing system on the basis of the remote attestation of at least one of the nodes provided by the BCSC in phase 806. If the attestation information received from the BCSC indicates positive attestation for the nodes, phase 810 comprises transmitting, by the data generating device, data to the nodes.

It should be appreciated that the measurements for integrity of at least one software or hardware component of a trusted execution environment of a node and attesting TEEs by the expert system may be performed for ascertaining security of the distributed computing system. The security may need to be ascertained, when new nodes, for example edge nodes or subsequent nodes, have been added to the distributed computing system. Phases 812 and 814 may comprise measurements and attesting that correspond with phases 802 and 804. After phases 812 and 814, the BCSC comprises updated information indicating a positive or negative attestation for one or more nodes. Phase 816 may comprise remote attestation similar to phase 806. Phase 818 may comprise controlling, by the data generating device, communications of data from the data generating device 202 to the nodes on the basis of result of the remote attestation provided by the BCSC in phase 816. Phase 820 comprises determining to suppress transmission data from the data generating device to the nodes on the basis of the remote attestation indicating a negative attestation of one or more nodes. Accordingly, a negative attestation of a single node of the distributed computing system may cause that transmission of data is suppressed. On the other hand the negative attestation may concern a group of the nodes, for example all nodes of the distributed computing system.

In an embodiment the data generating device 202 may have display, where information indicating the positive attestation in phase 808 and/or information indicating the negative attestation in phase 818 may be displayed to a user of the data generating device. The displayed information may be a notification, for example a graphical information element on the display, where the user is provided textual information indicating the positive/negative attestation. Examples of the notifications comprise in-app notifications and push notifications. In an example, the notification may be an in-app notification or a push notification. An in-app notification may be also referred to as in-app messages. The in-app notifications may be displayed during use of a specific app, i.e. application. Accordingly, the in-app notification may be displayed directly within the app itself executed in the data generating device. The push notification may be displayed even if a specific application is not being displayed. Accordingly, the push notification may be a notification by one application being executed in the data generating device in the background and the push notification may be displayed on top of a home screen of the data generating device or on top of a view of another application. In this way the push notification may serve for alerting the user of the device even if the application is executed in the background.

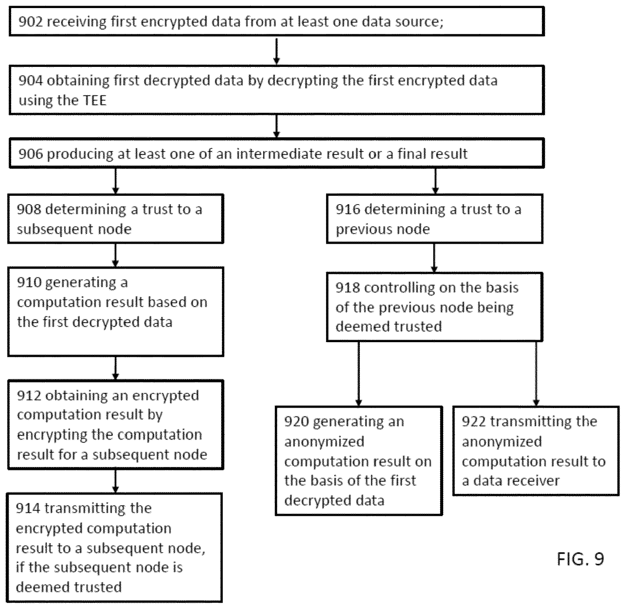

FIGURE 9 illustrates a method in accordance with at least some embodiments of the present invention. The method may be performed by one or mode nodes comprising TEEs in a distributed computing system in accordance with some of the FIGURES 1 to 6.

Phase 902 comprises receiving first encrypted data from at least one data source. Phase 904 comprises obtaining first decrypted data by decrypting the first encrypted data using the TEE. Phase 906 comprises producing at least one of an intermediate result and a final result. Producing an intermediate result comprises at least Phases 908 to 914. Phase 908 comprises determining a trust to a subsequent node. Phase 910 comprises generating a computation result based on the first decrypted data. Phase 912 comprises obtaining an encrypted computation result by encrypting the computation result for the subsequent node. Phase 914 comprises transmitting the encrypted computation result to the subsequent node, if the subsequent node is deemed trusted. In this way communications of computation results may be controlled such that the computation results are transmitted to nodes that are trusted. Producing a final result comprises at least phases 916 to 922. Phase 916 comprises determining a trust to a previous node. Phase 918 comprises controlling on the basis of the previous node being deemed trusted, at least one of phase 920 comprising generating an anonymized computation result on the basis of the first decrypted data, and phase 922 comprising transmitting the anonymized computation result to a data receiver. In this way data receivers may be provided anonymized computation results based on data from trusted sources.

In an embodiment, phases 908 and 916 comprise that the trust is provided by remote attestation of the previous node and/or the subsequent node by a blockchain smart contract. In this way the trust is provided in a tamper-proof manner, where the smart contract is followed in modifications to the ledger.

In an embodiment, phases 908 and 916 comprise that the trust is provided by remote attestation comprising at least obtaining measurements for integrity of at least one software or hardware component of a trusted execution environment of the node and attesting said measurements by an expert system. In this way the block chain smart may provide verified measurements.

In an embodiment, the data and results of computations are encrypted using an encryption key corresponding to a decryption key stored in the TEE of the node; and said decryption key is a private key of a public-private key pair for public key encryption or a pre-shared key for symmetric encryption.

At least in some embodiments, a node is configured to provide both a final result by phases 908 to 914 and an intermediate result by phases 916-922. In this way the node may be provide an intermediate result to a subsequent node in accordance with the network architecture described in FIGURE 6 for example and also to provide the final result to a data receiver.

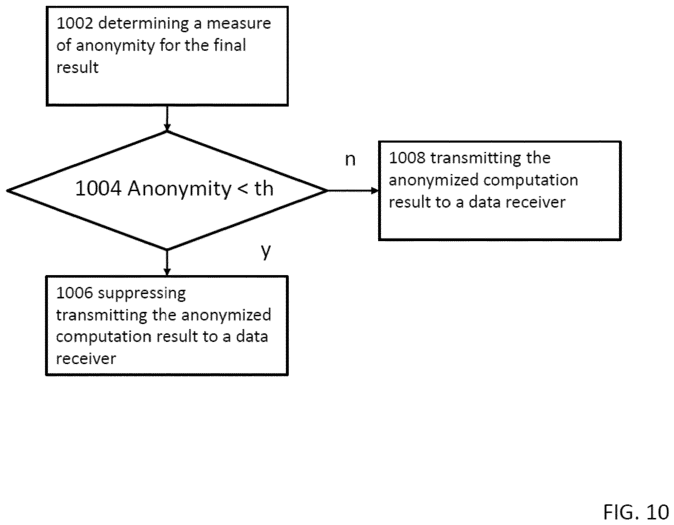

FIGURE 10 illustrates a method in accordance with at least some embodiments of the present invention. The method may be performed by one or mode nodes comprising TEEs in a distributed computing system in accordance with some of the FIGURES 1 to 6. The nodes may be capable of producing a final result to be transmitted to a data receiver, for example as described in the method of FIGURE 9. Phase 1002 comprises determining a measure of anonymity for the final result. Phase 1004 comprises comparing the anonymity of the final result to a threshold value. If a result of the comparison in phase 1004 is below the threshold, the phase 1006 is performed. Phase 1006 comprises suppressing transmitting the anonymized computation result to a data receiver. In this way sufficient anonymization of the final result of the distributed computing system may be provided. If a result of the comparison in phase 1004 is not below the threshold, for example the result is above the threshold, phase 1008 may be performed. Phase 1008 comprises transmitting the anonymized computation result to a data receiver. The final result is sufficiently anonymized such that anonymity of the data sources is provided.

In an example the suppressing transmitting anonymized computation result to a data receiver may comprise that the anonymized computation results is not transmitted to the data receiver. Moreover, the suppressing transmitting anonymized computation result may comprise one or more of:
a. - transmitting the anonymized computation results to one or more subsequent nodes of the distributed computing system. The one or more of the subsequent nodes may be capable of producing a final result that is transmitted to the data receiver in accordance with phases 922 of FIGURE 9 or phase 1008 of FIGURE 10.
b. performing further anonymized computations, for example in accordance with one or more techniques comprising noise addition, permutation, differential privacy, aggregation, k-anonymity, l-diversity and t-closeness.

FIGURE 11 illustrates an example apparatus capable of supporting at least some embodiments of the present invention. Illustrated is apparatus 1100, which may comprise, for example, a node of a distributed computing system or a data generating device. Comprised in the apparatus 1100 is processor 1110, which may comprise, for example, a single- or multi-core processor wherein a single-core processor comprises one processing core and a multi-core processor comprises more than one processing core. The processor may comprise a TEE. Processor 1110 may comprise more than one processor. A processing core may comprise, for example, a Cortex-A8 processing core manufactured by ARM Holdings or a Steamroller processing core produced by Advanced Micro Devices Corporation. Processor 1110 may comprise at least one Qualcomm Snapdragon and/or Intel Atom processor. Processor 1110 may comprise at least one application-specific integrated circuit, ASIC. Processor 1110 may comprise at least one field-programmable gate array, FPGA. Processor 1110 may be means for performing method steps in apparatus 1100. Processor 1110 may be configured, at least in part by computer instructions, to perform actions.

Apparatus 1100 may comprise memory 1120. Memory 1120 may comprise random-access memory and/or permanent memory. Memory 1120 may comprise at least one RAM chip. Memory 1120 may comprise solid-state, magnetic, optical and/or holographic memory, for example. Memory 1120 may be at least in part accessible to processor 1110. Memory 1120 may be at least in part comprised in processor 1110. Memory 1120 may be means for storing information. Memory 1120 may be a non-transitory computer readable medium. Memory 1120 may comprise computer instructions that processor 1110 is configured to execute. When computer instructions configured to cause processor 1110 to perform certain actions are stored in memory 1120, and apparatus 1100 overall is configured to run under the direction of processor 1110 using computer instructions from memory 1120, processor 1110 and/or its at least one processing core may be considered to be configured to perform said certain actions. Memory 1120 may be at least in part comprised in processor 1110. Memory 1120 may be at least in part external to apparatus 1100 but accessible to apparatus 1100.

Apparatus 1100 may comprise a transmitter 1130. Apparatus 1100 may comprise a receiver 1140. Transmitter 1130 and receiver 1140 may be configured to transmit and receive, respectively, information in accordance with at least one cellular or non-cellular standard. Transmitter 1130 may comprise more than one transmitter. Receiver 1140 may comprise more than one receiver. Transmitter 1130 and/or receiver 1140 may be configured to operate in accordance with global system for mobile communication, GSM, wideband code division multiple access, WCDMA, long term evolution, LTE, IS-95, wireless local area network, WLAN, Ethernet and/or worldwide interoperability for microwave access, WiMAX, standards, for example.

Apparatus 1100 may comprise a near-field communication, NFC, transceiver 1150. NFC transceiver 1150 may support at least one NFC technology, such as NFC, Bluetooth, Wibree or similar technologies.

Apparatus 1100 may comprise user interface, UI, 1160. UI 1160 may comprise at least one of a display, a keyboard, a touchscreen, a vibrator arranged to signal to a user by causing apparatus 1100 to vibrate, a speaker and a microphone. A user may be able to operate apparatus 1100 via UI 1160, for example to accept incoming telephone calls, to originate telephone calls or video calls, to browse the Internet, to manage digital files stored in memory 1120 or on a cloud accessible via transmitter 1130 and receiver 1140, or via NFC transceiver 1150, and/or to play games.

Apparatus 1100 may comprise or be arranged to accept a user identity module 1170. User identity module 1170 may comprise, for example, a subscriber identity module, SIM, card installable in apparatus 1100. A user identity module 1170 may comprise information identifying a subscription of a user of apparatus 1100. A user identity module 1170 may comprise cryptographic information usable to verify the identity of a user of apparatus 1100 and/or to facilitate encryption of communicated information and billing of the user of apparatus 1100 for communication effected via apparatus 1100.

Processor 1110 may be furnished with a transmitter arranged to output information from processor 1110, via electrical leads internal to apparatus 1100, to other apparatuses comprised in apparatus 1100. Such a transmitter may comprise a serial bus transmitter arranged to, for example, output information via at least one electrical lead to memory 1120 for storage therein. Alternatively to a serial bus, the transmitter may comprise a parallel bus transmitter. Likewise processor 1110 may comprise a receiver arranged to receive information in processor 1110, via electrical leads internal to apparatus 1100, from other apparatuses comprised in apparatus 1100. Such a receiver may comprise a serial bus receiver arranged to, for example, receive information via at least one electrical lead from receiver 1140 for processing in processor 1110. Alternatively to a serial bus, the receiver may comprise a parallel bus receiver.

Apparatus 1100 may comprise further apparatuses not illustrated in FIGURE 9. For example, where apparatus 1100 comprises a smartphone, it may comprise at least one digital camera. Some apparatuses 1100 may comprise a back-facing camera and a front-facing camera, wherein the back-facing camera may be intended for digital photography and the front-facing camera for video telephony. Apparatuses 1100 may comprise a fingerprint sensor arranged to authenticate, at least in part, a user of apparatus 1100. In some embodiments, apparatus 1100 lacks at least one device described above. For example, some apparatuses 1100 may lack a NFC transceiver 1150 and/or user identity module 1170.

Processor 1110, memory 1120, transmitter 1130, receiver 1140, NFC transceiver 1150, UI 1160 and/or user identity module 1170 may be interconnected by electrical leads internal to apparatus 1100 in a multitude of different ways. For example, each of the aforementioned devices may be separately connected to a master bus internal to apparatus 1100, to allow for the devices to exchange information. However, as the skilled person will appreciate, this is only one example and depending on the embodiment various ways of interconnecting at least two of the aforementioned devices may be selected without departing from the scope of the present invention.

An embodiment a non-transitory computer readable medium having stored thereon a set of computer readable instructions that, when executed by at least one processor, cause an apparatus to at least: receiving, by a node of a distributed computing system, the node comprising a trusted execution environment (TEE), first encrypted data from at least one data source; obtaining, by the node, first decrypted data by decrypting the first encrypted data using the TEE; producing, by the node, at least one of an intermediate result or a final result; wherein the producing an intermediate result comprises at least: determining, by the node, a trust to a subsequent node; generating, by the node, a computation result based on the first decrypted data; obtaining, by the node, an encrypted computation result by encrypting the computation result for the subsequent node; and transmitting, by the node, the encrypted computation result to the subsequent node, if the subsequent node is deemed trusted; wherein the producing a final result comprises at least: determining, by the node, a trust to a previous node; and controlling, on the basis of the previous node being deemed trusted, at least one of generating, by the node, an anonymized computation result on the basis of the first decrypted data; and transmitting, by the node, the anonymized computation result to a data receiver.

It is to be understood that the embodiments of the invention disclosed are not limited to the particular structures or process steps disclosed herein, but are extended to equivalents thereof as would be recognized by those ordinarily skilled in the relevant arts. It should also be understood that terminology employed herein is used for the purpose of describing particular embodiments only and is not intended to be limiting.

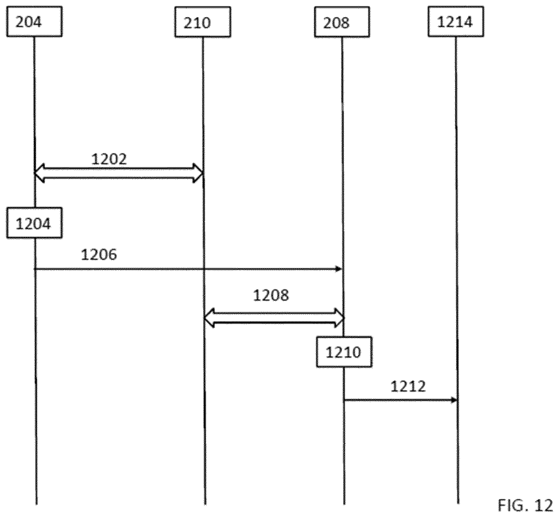

FIGURE 12 illustrates a sequence for proving trust between nodes of the distributed computing system in accordance with at least some embodiments of the present invention example. The sequence provides that computation results may be transmitted to nodes that are trusted as well as providing data receivers anonymized computations results based on data from trusted sources. The sequence is described with reference to both FIGURE 2 and FIGURE 12. Phases 1202 and 1208 comprise performing remote attestation of one or more of nodes of the distributed computing system to another node of the distributed computing system node by a blockchain smart contract 210. The remote attestation provides that a node that performs computations in one stage of two or more stages of computations performed by the nodes in the distributed computing system, may determine whether a subsequent node, in a next, later, stage of the computations is trusted. On the other hand, a node that performs computations in one stage of two or more stages of computations performed by the nodes in the distributed computing system, may determine whether a previous node, in a previous, later, stage of the computations is trusted. The remote attestation is now described with reference to edge nodes configured to perform a first stage of computations and one or more subsequent nodes configured to perform a second stage of computations. Although in the following a single edge node and a single subsequent node is referred to, it should be appreciated that remote attestation of more than one or even all of the nodes, e.g. edge nodes or subsequent nodes, may be needed for establishing trust between the nodes. Accordingly, the described phases may be used to establish trust between a plurality of nodes such that after the remote attestation, the phases may be performed between nodes that are deemed trusted.

Phase 1202 comprises remote attestation of a subsequent node 208 to an edge node 204 by the BCSC. The remote attestation may comprise that the edge node requests attestation of the subsequent node from the BCSC 210 and the BCSC transmits attestation information regarding the subsequent nodes to the edge node in response to the request. Phase 1204 comprises controlling, by the edge node, communications of computation results from the edge node 204 to the subsequent node on the basis of the remote attestation of the subsequent node provided by the BCSC in phase 1202. If the attestation information received from the BCSC indicates positive attestation for the subsequent node, the subsequent nodes are deemed trusted, phase 1206 is performed, where the edge node transmits computation results to the subsequent node. In this way computation results are transmitted to trusted subsequent node.

Phase 1208 comprises remote attestation of the edge node 208 to the subsequent node 204 by the BCSC. The remote attestation may comprise that the subsequent node requests attestation of the edge node from the BCSC 210 and the BCSC transmits attestation information regarding the edge node to the subsequent node in response to the request. Phase 1210 comprises controlling, by the subsequent node, at least one of generating an anonymized computation result on the basis of the computation results received from the edge node, and transmitting the anonymized computation result to a data receiver 1214. If the attestation information received from the BCSC indicates positive attestation for the edge node, the edge node is deemed trusted, and at least one or both of generating an anonymized computation result on the basis of the computations results received from the edge node, and at phase 1212 transmitting the anonymized computation result to the data receiver 1214 may be performed. In this way the data receiver is provided anonymized computation results based on data from trusted sources. On the other hand, if the attestation information received from the BCSC indicates negative attestation for the edge node, at least one of generating an anonymized computation result on the basis of the computation results received from the edge node, and transmitting the anonymized computation result to a data receiver 1214, may be omitted to avoid operations without trust.

Reference throughout this specification to "one embodiment" or "an embodiment" means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment.

As used herein, a plurality of items, structural elements and/or compositional elements may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the following description numerous specific details are provided to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the foregoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", i.e. a singular form, throughout this document does not exclude a plurality.

### ACRONYMS LIST

- BCSC: Blockchain Smart Contract
- DLNS: Distributed computing system Service
- ES: Expert System
- NFC: Near Field Communications
- TEE: Trusted Execution Environment
- UI: User Interface
- WLAN: Wireless Local Area Network

### REFERENCE SIGNS LIST

- 102: Data Generating Device
- 104: Edge Node
- 106a, 106b, 106c: Subsets of Data Generating Devices
- 108: Subsequent Node
- 111, 112, 113: Communication Step
- 114: Final Result
- 202: Data Generating Devices
- 204: Edge Nodes
- 208: Subsequent Node
- 210: Blockchain Smart Contract
- 212: Expert System
- 300: Cloud Network Infrastructure
- 301: Antenna
- 302: Data generating devices
- 304: Cloud Edge Node
- 308: Subsequent Nodes
- 310: Backhaul
- 312: Blockchain Platform
- 314: Application
- 402: Data Generating Devices
- 404: Edge Nodes
- 408: Intermediate Nodes
- 410: Output Node
- 412: Anonymized Computation Result
- 502: Data Generating Devices
- 504: Edge Node
- 508, 510: Subsequent Nodes
- 602: Data Generating Devices
- 604: Nodes Serving for Both Edge Nodes and Subsequent Nodes
- 702-710: Phases of Method of FIGURE 7
- 802-820: Phases of Sequence of FIGURE 8
- 902-922: Phases of Method of FIGURE 9
- 1002-1006: Phases of Method of FIGURE 10
- 1100: Apparatus
- 1110: Processor
- 1120: Memory
- 1130: Transmitter
- 1140: Receiver
- 1150: NFC Transceiver
- 1160: User Interface
- 1170: User Identity Module
- 1201-1212: Phases of FIGURE 12
- 1214: Data Receiver

## Claims

1. A node for a distributed computing system, wherein the distributed computing system comprises a series of nodes comprising the node and a previous node, wherein the previous node is configured to provide an intermediate result to the node, wherein the node comprises a trusted execution environment, TEE, and wherein the node is configured to perform:
- receiving first encrypted data from a data source;
- obtaining first decrypted data by decrypting the first encrypted data using the TEE;
- producing a final result; wherein the producing a final result comprising:
- determining a trust to the previous node; and
- controlling, on the basis of the previous node being deemed trusted:
- generating an anonymized computation result on the basis of the first decrypted data and the intermediate result; and
- transmitting the anonymized computation result to a data receiver outside of the distributed computing system.

2. The node of claim 1, wherein the trust is provided by remote attestation of the previous node by a blockchain smart contract.

3. The node of claim 2, wherein the remote attestation comprises:
- obtaining measurements for integrity of at least one software or hardware component of a trusted execution environment of the node; and
- attesting said measurements by an expert system, for example a blockchain application or an artificial intelligence system.

4. The node of any preceding claim, wherein the producing a final result comprises the following:
- determining a measure of anonymity for the final result, and if not exceeding a threshold value, suppressing transmitting the anonymized computation result to the data receiver.

5. The node of any preceding claims 1 to 4, wherein
- the data is encrypted using an encryption key corresponding to a decryption key stored in the TEE of the node; and wherein said decryption key is a private key of a public-private key pair for public key encryption or a pre-shared key for symmetric encryption.

6. The node of any preceding claims, wherein the anonymized computations are based on least one technique of: noise addition, permutation, differential privacy, aggregation, k-anonymity, l-diversity and t-closeness.

7. The node of any preceding claim, wherein the node is an edge node of the distributed computing system, an intermediate node of the distributed computing system and/or an output node of the distributed computing system.

8. A method comprising:
- receiving, by a node of a distributed computing system, first encrypted data from a data source, wherein the distributed computing system comprises a series of nodes comprising the node and a previous node, wherein the previous node is configured to provide an intermediate result to the node, and wherein the node comprises a trusted execution environment, TEE;
- obtaining, by the node, first decrypted data by decrypting the first encrypted data using the TEE;
- producing, by the node, a final result; wherein the producing a final result comprises:
- determining, by the node, a trust to the previous node; and controlling, on the basis of the previous node being deemed trusted:
- generating, by the node, an anonymized computation result on the basis of the first decrypted data and the intermediate result; and
- transmitting, by the node, the anonymized computation result to a data receiver outside of the distributed computing system.

9. The method of claim 8, wherein the trust is provided by remote attestation of the previous node by a blockchain smart contract.

10. The method of claim 9, wherein the remote attestation comprises:
- obtaining measurements for integrity of at least one software or hardware component of a trusted execution environment of the node; and
- attesting said measurements by an expert system.

11. The method according to any of claims 8 to 10, wherein the producing a final result comprises the following:
- determining a measure of anonymity for the final result, and if not exceeding a threshold value, suppressing transmitting the anonymized computation result to the data receiver.

12. The method according to any of claims 8 to 11, wherein
- the data is encrypted using an encryption key corresponding to a decryption key stored in the TEE of the node; and wherein said decryption key is a private key of a public-private key pair for public key encryption or a pre-shared key for symmetric encryption.

13. The method according to any of claims 8 to 12, wherein the anonymized computations are based on least one technique of: noise addition, permutation, differential privacy, aggregation, k-anonymity, l-diversity and t-closeness.

14. The method according to any of claims 8 to 13, further comprising producing, by another node of the distributed computing system, an intermediate result; wherein the producing an intermediate result comprises:
- determining, by the another node, a trust to a subsequent node;
- generating, by the another node, a computation result based on the first decrypted data;
- obtaining, by the another node, an encrypted computation result by encrypting the computation result for the subsequent node; and
- transmitting, by the another node, the encrypted computation result to the subsequent node, if the subsequent node is deemed trusted;
wherein the producing the intermediate result comprises aggregating data received from a plurality of data sources.

15. A computer program product comprising instructions, which when executed by a node of a distributed computing system which comprises a trusted execution environment, TEE, cause the node of a distributed computing system which comprises a TEE to perform a method according to any of the claims 8 to 14.

## Patentansprüche

1. Knoten für ein verteiltes Rechensystem, wobei das verteilte Rechensystem eine Reihe von Knoten umfasst, die den Knoten und einen vorherigen Knoten umfassen, wobei der vorherige Knoten dafür konfiguriert ist, dem Knoten ein Zwischenergebnis bereitzustellen, wobei der Knoten eine Trusted Execution Environment (vertrauenswürdige Laufzeitumgebung, TEE) umfasst und wobei der Knoten dafür konfiguriert ist, Folgendes durchzuführen:
- Empfangen erster verschlüsselter Daten von einer Datenquelle;
- Erhalten erster entschlüsselter Daten durch Entschlüsseln der ersten verschlüsselten Daten unter Verwendung der TEE;
- Erzeugen eines Endergebnisses;
wobei das Erzeugen eines Endergebnisses Folgendes umfasst:
- Bestimmen einer Vertrauenswürdigkeit des vorherigen Knotens; und
- Kontrollieren, auf der Grundlage, dass der vorherige Knoten als vertrauenswürdig eingestuft wurde:
- Erzeugen eines anonymisierten Rechenergebnisses auf der Grundlage der ersten entschlüsselten Daten und des Zwischenergebnisses; und
- Übermitteln des anonymisierten Rechenergebnisses an einen Datenempfänger außerhalb des verteilten Rechensystems.

2. Knoten nach Anspruch 1, wobei die Vertrauenswürdigkeit durch eine Integritätsprüfung des vorherigen Knotens durch einen Blockchain Smart Contract bereitgestellt wird.

3. Knoten nach Anspruch 2, wobei die Integritätsprüfung umfasst:
- Erhalten von Messergebnissen zur Integrität von mindestens einer Software- oder Hardwarekomponente einer Trusted Execution Environment des Knotens; und
- Bestätigen der Messergebnisse durch ein Expertensystem, beispielsweise eine Blockchain-Anwendung oder ein System der künstlichen Intelligenz.

4. Knoten nach einem der vorstehenden Ansprüche, wobei das Erzeugen eines Endergebnisses Folgendes umfasst:
- Bestimmen eines Maßes für die Anonymität des Endergebnisses und, wenn ein Schwellenwert nicht überschritten wird, Unterdrücken der Übermittlung des anonymisierten Rechenergebnisses an den Datenempfänger.

5. Knoten nach einem der vorstehenden Ansprüche 1 bis 4, wobei
- die Daten unter Verwendung eines Verschlüsselungsschlüssels verschlüsselt werden, der einem in der TEE des Knotens gespeicherten Entschlüsselungsschlüssel entspricht; und wobei der Entschlüsselungsschlüssel ein privater Schlüssel eines Paares aus öffentlichem und privatem Schlüssel zur Verschlüsselung mit öffentlichem Schlüssel oder ein vorab freigegebener Schlüssel zur symmetrischen Verschlüsselung ist.

6. Knoten nach einem der vorstehenden Ansprüche, wobei die anonymisierten Rechenvorgänge auf mindestens einer der folgenden Techniken basieren: Rauschaddition, Permutation, Differential Privacy, Aggregation, k-Anonymity, I-Diversity und t-Closeness.

7. Knoten nach einem der vorstehenden Ansprüche, wobei der Knoten ein Randknoten des verteilten Rechensystems, ein Zwischenknoten des verteilten Rechensystems und/oder ein Ausgangsknoten des verteilten Rechensystems ist.

8. Verfahren umfassend:
- Empfangen, durch einen Knoten eines verteilten Rechensystems, von ersten verschlüsselten Daten von einer Datenquelle, wobei das verteilte Rechensystem eine Reihe von Knoten umfasst, die den Knoten und einen vorherigen Knoten umfassen, wobei der vorherige Knoten dafür konfiguriert ist, dem Knoten ein Zwischenergebnis bereitzustellen und wobei der Knoten eine Trusted Execution Environment, TEE, umfasst;
- Erhalten, durch den Knoten, erster entschlüsselter Daten durch Entschlüsseln der ersten verschlüsselten Daten unter Verwendung der TEE;
- Erzeugen eines Endergebnisses durch den Knoten;
wobei das Erzeugen eines Endergebnisses Folgendes umfasst:
- Bestimmen, durch den Knoten, der Vertrauenswürdigkeit des vorherigen Knotens; und Kontrollieren, auf der Grundlage, dass der vorherige Knoten als vertrauenswürdig eingestuft wurde:
- Erzeugen, durch den Knoten, eines anonymisierten Rechenergebnisses auf der Grundlage der ersten entschlüsselten Daten und des Zwischenergebnisses; und
- Übermitteln, durch den Knoten, des anonymisierten Rechenergebnisses an einen Datenempfänger außerhalb des verteilten Rechensystems.

9. Verfahren nach Anspruch 8, wobei die Vertrauenswürdigkeit durch eine Integritätsprüfung des vorherigen Knotens durch einen Blockchain Smart Contract bereitgestellt wird.

10. Verfahren nach Anspruch 9, wobei die Integritätsprüfung umfasst:
- Erhalten von Messergebnissen zur Integrität von mindestens einer Software- oder Hardwarekomponente einer Trusted Execution Environment des Knotens; und
- Bestätigen der Messergebnisse durch ein Expertensystem.

11. Verfahren nach einem der Ansprüche 8 bis 10, wobei das Erzeugen eines Endergebnisses Folgendes umfasst:
- Bestimmen eines Maßes für die Anonymität des Endergebnisses und, wenn ein Schwellenwert nicht überschritten wird, Unterdrücken der Übermittlung des anonymisierten Rechenergebnisses an den Datenempfänger.

12. Verfahren nach einem der Ansprüche 8 bis 11, wobei
- die Daten unter Verwendung eines Verschlüsselungsschlüssels verschlüsselt werden, der einem in der TEE des Knotens gespeicherten Entschlüsselungsschlüssel entspricht; und wobei der Entschlüsselungsschlüssel ein privater Schlüssel eines Paares aus öffentlichem und privatem Schlüssel zur Verschlüsselung mit öffentlichem Schlüssel oder ein vorab freigegebener Schlüssel zur symmetrischen Verschlüsselung ist.

13. Verfahren nach einem der Ansprüche 8 bis 12, wobei die anonymisierten Rechenvorgänge auf mindestens einer der folgenden Techniken basieren: Rauschaddition, Permutation, Differential Privacy, Aggregation, k-Anonymity, I-Diversity und t-Closeness.

14. Verfahren nach einem der Ansprüche 8 bis 13, das weiter das Erzeugen eines Zwischenergebnisses durch einen anderen Knoten des verteilten Rechensystems umfasst;
wobei das Erzeugen eines Zwischenergebnisses Folgendes umfasst:
- Bestimmen, durch den anderen Knoten, der Vertrauenswürdigkeit einen nachfolgenden Knotens;
- Erzeugen, durch den anderen Knoten, eines Rechenergebnisses auf der Grundlage der ersten entschlüsselten Daten;
- Erhalten, durch den anderen Knoten, eines verschlüsselten Rechenergebnisses durch Verschlüsseln des Rechenergebnisses für den nachfolgenden Knoten; und
- Übermitteln, durch den anderen Knoten, des verschlüsselten Rechenergebnisses an den nachfolgenden Knoten, wenn der nachfolgende Knoten als vertrauenswürdig eingestuft wurde;
wobei das Erzeugen des Zwischenergebnisses das Aggregieren von Daten umfasst, die von einer Vielzahl von Datenquellen empfangen werden.

15. Computerprogrammprodukt, das Befehle umfasst, die bei Ausführung durch einen Knoten eines verteilten Rechensystems, das eine Trusted Execution Environment, TEE, umfasst, bewirken, dass der Knoten eines verteilten Rechensystems, das eine TEE umfasst, ein Verfahren nach einem der Ansprüche 8 bis 14 durchführt.

## Revendications

1. Nœud pour un système informatique distribué, dans lequel le système informatique distribué comprend une série de nœuds comprenant le nœud et un nœud précédent, dans lequel le nœud précédent est configuré pour fournir un résultat intermédiaire au nœud, dans lequel le nœud comprend un environnement d'exécution de confiance, TEE, et dans lequel le nœud est configuré pour réaliser :
- la réception de premières données chiffrées provenant d'une source de données ;
- l'obtention de premières données déchiffrées par le déchiffrement des premières données chiffrées à l'aide du TEE ;
- la production d'un résultat final ;
dans lequel la production d'un résultat final comprenant :
- la détermination d'une confiance envers le nœud précédent ; et
- la commande, sur la base du fait que le nœud précédent soit considéré comme étant de confiance, de :
- la génération d'un résultat de calcul anonymisé sur la base des premières données déchiffrées et du résultat intermédiaire ; et
- l'émission du résultat de calcul anonymisé vers un récepteur de données à l'extérieur du système informatique distribué.

2. Nœud selon la revendication 1, dans lequel la confiance est fournie par une certification à distance du nœud précédent par un contrat intelligent de chaîne de blocs.

3. Nœud selon la revendication 2, dans lequel la certification à distance comprend :
- l'obtention de mesures pour l'intégrité d'au moins un composant logiciel ou matériel d'un environnement d'exécution de confiance du nœud ; et
- la certification desdites mesures par un système expert, par exemple une application de chaîne de blocs ou un système d'intelligence artificielle.

4. Nœud selon une quelconque revendication précédente, dans lequel la production d'un résultat final comprend ce qui suit :
- la détermination d'une mesure d'anonymat pour le résultat final, et si elle ne dépasse pas une valeur seuil, la suppression de l'émission du résultat de calcul anonymisé vers le récepteur de données.

5. Nœud selon l'une quelconque des revendications 1 à 4 précédentes, dans lequel
- les données sont chiffrées à l'aide d'une clé de chiffrement correspondant à une clé de déchiffrement stockée dans le TEE du nœud ; et dans lequel ladite clé de déchiffrement est une clé privée d'une paire de clés publique-privée pour un chiffrement de clé publique ou une clé pré-partagée pour un chiffrement symétrique.

6. Nœud selon l'une quelconque des revendications précédentes, dans lequel les calculs anonymisés sont basés sur au moins une technique parmi : un ajout de bruit, une permutation, une confidentialité différentielle, une agrégation, un k-anonymat, une l-diversité et une t-proximité.

7. Nœud selon une quelconque revendication précédente, dans lequel le nœud est un nœud périphérique du système informatique distribué, un nœud intermédiaire du système informatique distribué et/ou un nœud de sortie du système informatique distribué.

8. Procédé comprenant :
- la réception, par un nœud d'un système informatique distribué, de premières données chiffrées provenant d'une source de données, dans lequel le système informatique distribué comprend une série de nœuds comprenant le nœud et un nœud précédent, dans lequel le nœud précédent est configuré pour fournir un résultat intermédiaire au nœud, et dans lequel le nœud comprend un environnement d'exécution de confiance, TEE ;
- l'obtention, par le nœud, de premières données déchiffrées par le déchiffrement des premières données chiffrées à l'aide du TEE ;
- la production, par le nœud, d'un résultat final ;
dans lequel la production d'un résultat final comprend :
- la détermination, par le nœud, d'une confiance envers le nœud précédent ; et la commande, sur la base du fait que le nœud précédent soit considéré comme étant de confiance, de :
- la génération, par le nœud, d'un résultat de calcul anonymisé sur la base des premières données déchiffrées et du résultat intermédiaire ; et
- l'émission, par le nœud, du résultat de calcul anonymisé vers un récepteur de données à l'extérieur du système informatique distribué.

9. Procédé selon la revendication 8, dans lequel la confiance est fournie par une certification à distance du nœud précédent par un contrat intelligent de chaîne de blocs.

10. Procédé selon la revendication 9, dans lequel la certification à distance comprend :
- l'obtention de mesures pour l'intégrité d'au moins un composant logiciel ou matériel d'un environnement d'exécution de confiance du nœud ; et
- la certification desdites mesures par un système expert.

11. Procédé selon l'une quelconque des revendications 8 à 10, dans lequel la production d'un résultat final comprend ce qui suit :
- la détermination d'une mesure d'anonymat pour le résultat final, et si elle ne dépasse pas une valeur seuil, la suppression de l'émission du résultat de calcul anonymisé vers le récepteur de données.

12. Procédé selon l'une quelconque des revendications 8 à 11, dans lequel
- les données sont chiffrées à l'aide d'une clé de chiffrement correspondant à une clé de déchiffrement stockée dans le TEE du nœud ; et dans lequel ladite clé de déchiffrement est une clé privée d'une paire de clés publique-privée pour un chiffrement de clé publique ou une clé pré-partagée pour un chiffrement symétrique.

13. Procédé selon l'une quelconque des revendications 8 à 12, dans lequel les calculs anonymisés sont basés sur au moins une technique parmi : un ajout de bruit, une permutation, une confidentialité différentielle, une agrégation, un k-anonymat, une l-diversité et une t-proximité.

14. Procédé selon l'une quelconque des revendications 8 à 13, comprenant en outre la production, par un autre nœud du système informatique distribué, d'un résultat intermédiaire ; dans lequel la production d'un résultat intermédiaire comprend :
- la détermination, par l'autre nœud, d'une confiance envers un nœud suivant ;
- la génération, par l'autre nœud, d'un résultat de calcul basé sur les premières données déchiffrées ;
- l'obtention, par l'autre nœud, d'un résultat de calcul chiffré par le chiffrement du résultat de calcul pour le nœud suivant ; et
- l'émission, par l'autre nœud, du résultat de calcul chiffré vers le nœud suivant, si le nœud suivant est considéré comme étant de confiance ;
dans lequel la production du résultat intermédiaire comprend l'agrégation de données reçues en provenance d'une pluralité de sources de données.

15. Produit programme d'ordinateur comprenant des instructions, qui lors de leur exécution par un nœud d'un système informatique distribué qui comprend un environnement d'exécution de confiance, TEE, amènent le nœud d'un système informatique distribué qui comprend un TEE à réaliser un procédé selon l'une quelconque des revendications 8 à 14.
